# EUROPEAN PATENT APPLICATION

(11) **EP 4 606 781 A1**
(43) Date of publication of application: **27.08.2025**
(21) Application number: 24159395.3
(22) Date of filing: 23.02.2024
(51) Int. Cl.: C04B 24/12, C04B 24/26, C04B 24/32, C04B 28/04, C04B 40/00

(54) **METHODS TO IMPROVE THE WORKABILITY OF CEMENTITIOUS COMPOSITIONS COMPRISING CALCINED CLAY**

(71) Applicant: Sika Technology AG, 6340 Baar (CH)
(72) Inventor: CHAPELAT, Julien, 2502 Bienne (CH); GALLUCCI, Emmanuel, 8048 Zürich (CH); JUILLAND, Patrick, 3005 Bern (CH); WECKWERTH, Stefanie Anne, 8046 Zürich (CH); WEIDMANN, Jürg, 8404 Winterthur (CH)
(74) Representative: Sika Patent Attorneys

(57) **Abstract**

The present invention relates to methods to improve the workability of a cementitious composition comprising calcined clay comprising a step of intergrinding and/or intermixing the at least one additive selected from polyvinyl imidazole, amides of sugar acids, and polymers consisting of repeating units derived from olefinically unsaturated polyethers with the at least one constituent of the cementitious composition. The present invention also relates to a cementitious composition comprising calcined clay and at least one additive selected from polyvinylimidazole, amides of sugar acids, and polymers consisting of repeating units derived from olefinically unsaturated polyethers.

## Description

### Technical Field

The present invention relates to additives to improve the workability of cementitious compositions comprising calcined clay. Suitable additives are selected from polyvinylimidazole, amides of sugar acids, polymers consisting of repeating units derived from olefinically unsaturated polyethers, and mixtures thereof.

### Background of the invention

Cement-based building materials, especially concrete or mortars, typically rely on cementitious materials as binders, for example Portland cements. Due to the rapid rate of infrastructure development there is an enormous demand for Portland cements. However, the use of Portland cement is associated with a high environmental footprint. One major reason are the high CO₂ emissions associated with the manufacture of Portland cements which are estimated to amount to 0.8 kg CO₂ per kg of Portland cement clinker produced. Various approaches have therefore been taken to at least partially replace Portland cements from the binder composition in concrete and mortars.

One particularly appealing approach is the partial replacement of Portland cement clinker by supplementary cementitious materials. Known supplementary cementitious materials are for example limestone or clay, especially calcined clay, sometimes used in combination.

But the use of many supplementary cementitious materials is limited by their availability or by technical constraints.

For example, Portland-puzzolane cements are one kind of Portland cements which are regulated by standard EN 197-1:2011. These cements can contain up to 20 weight-% or even up to 35 weight-% of calcined pozzolanic materials, for example calcined clays, apart from the Portland clinker. In addition, composite cementitious binders are known where two or more supplementary cementitious materials are used in combination with Portland cement. For example, WO 2010/130511 (Aalborg Portland AS) discloses cementitious compositions comprising Portland cement clinker, calcined clay, and limestone.

However, the additional use of calcined clay in cementitious compositions typically leads to a reduced workability, especially lower slump or slump flow, of the cementitious compositions. This often makes necessary the use of higher amounts of water and/or of dispersants which in turn may lead to reduced strength, higher air content, or other undesirable effects.

It is known in the prior art, that deleterious effects of clay minerals on the workability of cementitious compositions can be mitigated with numerous additives. For example, WO2010/005117 (W.R. Grace) discloses a method using polycationic compounds in combination with hydroxycarboxylic acids to mitigate the effect of clay-bearing aggregates. WO 2016/096970 (BASF SE) teaches a method using polyimidazolium compounds to inhibit the swelling of clay in subterranean formations. WO 2020/070095 (Sika Technology AG) discloses the use of uncharged poly(meth)acrylate esters with polyether side chains as clay-inerting agent.

WO 2021/254836 (Sika Technology AG) discloses a method to increase the workability of cementitious compositions comprising Portland cement, calcined clay, and limestone by adding a combination of polycarboxylate ether and hydroxycarboxylic acids or sugar derivatives such as for example gluconate.

However, there remains a need in the art to provide additives suitable to improve the workability of cementitious compositions comprising calcined clay.

### Summary of the invention

It is an object of the present invention to provide methods and additives to improve the workability of cementitious compositions comprising calcined clay. In particular, the improvement of workability should be possible with as low as possible additional retardation.

It has surprisingly been found that additives selected from polyvinylimidazole, amides of sugar acids, polymers consisting of repeating units derived from olefinically unsaturated polyethers, and mixtures thereof are suitable to improve the workability of a cementitious binder composition comprising calcined clay. At the same time, these additives lead to only low retardation. It is a further advantage of the additives of the present invention that they do not affect the mechanical strength at early and late age of cured cementitious compositions to a degree that would be relevant for practical applications. Mechanical strength in this respect in particular is the compressive strength and/or flexural strength.

Additives of the present invention have also been found to be particularly effective in combination with high range water reducers, in particular polycarboxylate ethers. It is possible to reduce the amount of high range water reducers needed to achieve a certain level of workability when combined with additives of the present invention. Additives of the present invention are therefore suitable to increase the effectiveness of a polycarboxylate ether.

Without wishing to be bound by theory, it is believed that the additives of the present invention are adsorbed on calcined clay more readily than high range water reducers, especially polycarboxylate ether. Therefore, when making use of the inventive additives, the adsorption capacity of calcined clay towards high range water reducers can be reduced or eliminated. Also it might be that additives act as a co-surfactant with the high range water reducer, shielding the latter from calcined clay. The precise mechanism might depend on the nature of the cementitious compositions and the specific nature of additive used. Additionally or in the alternative it may be the case that additives of the present invention act on raw clay or non-calcined clay present.

Further aspects of the present invention are the subject of independent claims. Preferred embodiments are the subject of dependent claims.

### Detailed Ways

In a first aspect the present invention relates to a method to improve the workability of cementitious compositions comprising calcined clay, said method comprising the steps of
(i) providing at least one constituent of the cementitious composition,
(ii) providing at least one additive selected from polyvinylimidazole, amides of sugar acids, polymers consisting of repeating units derived from olefinically unsaturated polyethers, and mixtures thereof, and
(iii) intergrinding and/or intermixing the at least one additive provided in step (ii) with the at least one constituent of cementitious composition provided in step (i).

Within the present context an "improvement of the workability" of a cementitious composition is measured as a difference between a cementitious composition mixed with water and comprising an additive of the present invention and the same cementitious composition mixed with the same amount of water but without the additive. Of course, comparison of the workability must be done after the same time has elapsed after mixing with water. An improvement of the workability in particular refers to at least one of the following:
(i) an increased slump as measured according to standard EN 12350-2:2019,
(ii) an increased slump flow as measured according to standard EN 12350-5:2019,
(iii) an increased slump flow spread as measured according to standard EN 12350-8:2019,
(iv) a reduced flow time as measured according to standard EN 12350-9:2010,
(v) a reduced loss of any of the properties (i) - (iv) over time,
(vi) a reduced amount of water needed to achieve the same level of any of the properties (i) - (iv) at a given time.

Within the present context, the term "calcined clay" stands for a clay material that has been put to a heat treatment, preferably at a temperature between 500 - 900 °C, or in a flash calcination process at temperatures between 800 - 1100 °C. A suitable flash calcination process is for example described in WO 2014/085538. Clay minerals belonging to the kaolin group, especially kaolinite or micas, are particularly preferred for the production of calcined clays within the present context, however, other clay minerals may also be suitable.

A calcined clay is an anhydrous material. According to embodiments, calcined clays are produced by heat treatment separately from other constituents of the binder composition and especially separately from the Portland cement and/or other pozzolanic and/or latent hydraulic materials present. It is preferred within the present context that during the calcination of clay the clay material is dehydroxylated to an amorphous material while the formation of crystalline high temperature aluminosilicate phases such as mullite is prevented. Calcined clays generally are amorphous, have a significantly higher specific surface as compared to the original clay, and have pozzolanic activity.

According to especially preferred embodiments of the present invention, the calcined clay is metakaolin. Metakaolin is a material resulting from the calcination of kaolinite or minerals that are rich in kaolinite, e.g. have a content of kaolinite of at least 30 wt.- %, preferably to at least 35 wt.-%, relative to its dry weight. Calcination temperatures for the manufacturing of metakaolin typically are in the range of 500 - 900 °C.

According to embodiments, the calcined clay is ground to a powder with a 45 µm residue as measured according to ASTM C 430-96 (2003) of at least 0.5 w%, preferably at least 2 w%, still more preferably at least 10 w%, especially at least 20 w%. A preferred particle size of calcined clay within the present context is a D50 of between 1 - 5 µm measured by laser diffraction as described in ISO 13320:2009.

A cementitious composition within the present context is a composition comprising at least one cementitious binder. A cementitious binder can be any binder that cures when mixed with water thereby forming solid, insoluble hydrates and thus developing strength. Preferred cementitious binders include cements, in particular Portland cement, pozzolanes, latent hydraulic materials, lime, and calcium sulfate.

According to preferred embodiments, in a method of the present invention the cementitious composition comprises calcined clay and cement, preferably calcined clay and Portland cement, especially metakaolin and Portland cement.

Portland cement in particular is Ordinary Portland cement such as CEM I according to standard EN 197-1:2011. However, Portland cement can also be Ordinary Portland cement according to relevant ASTM standard, JIS standard, or Chinese standard.

A cementitious composition of the present composition may comprise other cements than Portland cement such as calcium aluminate cements, for example according to standard EN 14647:2005, or calcium sulfoaluminate cements. It is preferred, within the present context, that where calcium aluminate cement and/or calcium sulfoaluminate cement are present, the content of Portland cement in a cementitious composition is higher than the content of calcium aluminate cement and/or calcium sulfoaluminate cement.

A cementitious composition of the present invention may comprise pozzolanes or latent hydraulic materials that are not calcined clays. Examples for pozzolanes or latent hydraulic materials are for example slag, fly ash, silica fume, volcanic ashes, pumice, and burnt shale.

According to embodiments, the cementitious composition additionally comprises limestone and optionally additionally comprises calcium sulfate.

In particular, limestone is as defined in standard EN 197-1:2011. In the alternative, the term "limestone" may also stand for magnesium carbonate, dolomite, and or mixtures of magnesium carbonate, dolomite, and/or calcium carbonate. It is especially preferred that limestone within the present context is a naturally occurring limestone mainly consisting of calcium carbonate (typically calcite and/or aragonite) but typically also containing some magnesium carbonate and/or dolomite. Limestone may also be a naturally occurring marl.

Limestone, within the present context, is a ground material that is not heat treated. Especially, the limestone is not decarbonated. According to embodiments, the limestone has a Blaine surface of 3'000 - 15'000 cm²/g. The Blaine surface is measured as described in standard EN 196-6:2010.

Within the present context, the term "calcium sulfate" encompasses gypsum, calcium sulfate dihydrate, calcium sulfate hemihydrate (in the alpha or beta form), and/or anhydrite. Calcium sulfate may also be present as part of the Portland cement. In that case, any content of calcium sulfate in the Portland cement has to be calculated within the present context.

A cementitious composition can be in dry form, especially can be a cementitious binder, a dry mortar, or a dry concrete mix. A cementitious composition can also be in wet form, especially can be a cementitious binder paste, a wet mortar, or a concrete mix. A cementitious composition within the present context does not refer to a cured and hardened material.

According to the above, a constituent of the cementitious composition may be selected from calcined clay, cementitious binder, in particular pozzolanes and/or latent hydraulic materials different from calcined clay, cements, especially Portland cement, lime, limestone, calcium sulfate, or any mixture thereof. A constituent of the cementitious composition may also be selected from aggregates or fillers, admixtures different from the additive of the present invention, water, or any mixture thereof.

According to embodiments, a cementitious composition of the present invention comprises Portland cement and calcined clay in a weight ratio of Portland cement to calcined clay from 33:1 to 1:2, preferably from 10:1 to 1:1, more preferably from 4:1 to 1:1.

According to embodiments, a cementitious composition of the present invention comprises Portland cement, calcined clay, limestone and optionally gypsum in the following weight ratios
a) Portland cement to calcined clay from 33:1 to 1:2, preferably from 10:1 to 1:1, more preferably from 4:1 to 1:1,
b) Portland cement to limestone from 20:1 to 1:4, preferably from 10:1 to 1:1, more preferably from 5:1 to 1:1,
c) calcined clay to limestone from 10:1 to 1:33, preferably from 5:1 to 1:10, more preferably from 5:1 to 1:1, and
optionally 1 - 8 w%, preferably 2 - 4 w%, of calcium sulfate, relative to the total combined dry weight of Portland cement, limestone, and calcined clay.

According to embodiments, a cementitious composition of the present invention comprises
a) 25 - 100 mass parts of Portland cement,
b) 3 - 50 mass parts of calcined clay, especially of metakaolin,
c) 5 - 100 mass parts of limestone.

According to embodiments, a cementitious composition of the present invention comprises
a) 50 mass parts of Portland cement,
b) 20 - 50 mass parts of calcined clay, especially of metakaolin,
c) 10 - 50 mass parts of limestone.

According to embodiments, the cementitious binder in a cementitious composition consists to
92 - 99 wt.-%, relative to the total dry weight of the cementitious binder, of
a) 25 - 100 mass parts of Portland cement,
b) 3 - 50 mass parts of calcined clay, especially of metakaolin,
c) 5 - 100 mass parts of limestone, and
to 1 - 8 wt.-%, relative to the total dry weight of the cementitious binder, of calcium sulfate.

According to embodiments, the cementitious binder in a cementitious composition consists to 92 - 99 wt.-%, relative to the total dry weight of the cementitious binder, of
a) 50 mass parts of Portland cement,
b) 20 - 50 mass parts of calcined clay, especially of metakaolin,
c) 10 - 50 mass parts of limestone, and
to 1 - 8 wt.-%, relative to the total dry weight of the binder composition, of calcium sulfate.

Especially, in such binder compositions, the mass ratios of calcined clay, limestone, and Portland cement are as defined above.

The additive of the present invention is selected from polyvinylimidazole, amides of sugar acids, polymers consisting of repeating units derived from olefinically unsaturated polyethers, and mixtures thereof.

Additives of the present invention are uncharged. Uncharged means that additives of the present invention do not carry any positive or negative electrical charges. Additives of the present invention also are not zwitterionic.

It has been found that additives of the present invention are effective in increasing the workability. In addition, additives of the present invention were found to have little or no retardation of a cementitious composition comprising calcined clay. Retardation in this context relates to retardation of the setting of the cementitious composition. Retardation can be measured by comparing the time needed to reach a first hydration peak, as measured by isothermal calorimetry carried out at 23°C, of a cementitious composition comprising an additive of the present invention versus a reference without such additive. The first hydration peak typically corresponds to the hydration of silicate phases.

Polyvinylimidazol within the present context is a polymer comprising at least one monomeric unit derived from N-vinylimidazol and optionally additionally comprising further monomeric units. Further monomeric units can be selected from N-vinylpyrrolidone, N-vinylformamide, N-vinylcarboazol, N-vinylcaprolactam, vinylphsphonic acid, vinyl phosphoric acid, vinyl sulfonic acid, vinyl acetate, (meth)acrylic acid and their esters, (meth)acryl amide, and/or styrene. The content of monomeric units derived from N-vinylimidazol in polyvinylimidazol can be at least 50 mol%, preferably at least 75 mol%, more preferably at least 90 mol%, especially at least 98 mol%. It is preferred within the present context that the polyvinylimidazol is a homopolymer of N-vinylimidazol.

A weight-average molecular weight (M_{w}) of the homo-polyvinylimidazol preferably is from 500 - 60000 g/mol, especially 1000 - 50000 g/mol, in particular 2000 - 15000 g/mol. The weight-average molecular weight (Mw) is determined by gel permeation chromatography (GPC), using polyethylene glycol (PEG) as standard.

Amides of sugar acids have the general structure (I): 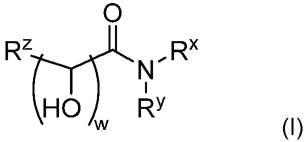 where
R^{x}, R^{y} independently of one another are H, C1 - C18 alkyl which may be substituted by N, O, Si, P and/or S, or (AO)ᵥ-R^{M} where A at each occurrence may be the same or different and is ethylene or propylene, v = 2 - 100, and R^{M} is H or C1 - C8 alkyl, R^{z} is H, -CH₂OH, -COOH, or -CON(R^{x})(R^{y}), and
w = 1, 2, 3, 4, 5.

Amides of sugar acids can be prepared by reacting a sugar acid lactone with a suitable amine in a conventional manner. Alternatively, a sugar acid may be amidated with a suitable amine.

Amides of sugar acids preferably are amides of glyceric acid, xylonic acid, gluconic acid, glucuronic acid, galacturonic acid, iduronic acid, tartaric acid, mucic acid, saccharic acid. Particularly preferably, amides of sugar acids are selected from amides of gluconic acid, also called gluconamides.

Gluconamides can be obtained by the reaction of glucono-δ-lactone with suitable amines. A suitable method for synthesis is for example disclosed in WO 2018/077772 (p. 21, I. 10- 17). Suitable secondary amines within the present context especially are alkylamines which may be substituted by aromatic groups or silyl-groups, arylamines, α,ω-alkanediamines, and alkoxylated amines. Particularly suitable amines are methylamine, ethylamine, benzylamine, 3-(triethoxysilyl)propyl-1-amine, N¹-3-(triethoxysilyl)propyl)-ethane-1,2-diamine, aniline, 1,2-ethanediamine or 1,6-hexanediamine, as well as ethoxylated and/or propoxylated amines with a molecular weight Mw measured by GPC of between 500 to 5000 g/mol, in particular appr. 2000 g/mol.

Polymers consisting of repeating units derived from olefinically unsaturated polyethers in particular are homo- or copolymers of polyethers of the general structure (II) 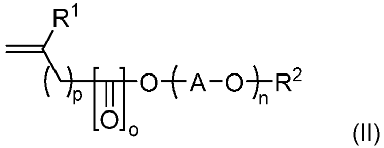 where
R¹ is H or methyl,
R² is H or C1 - C8 alkyl,
A independently of one another is CₙH₂ₙ, preferably is C₂H₄ or C₃H₆,
p = 0, 1, or 2,
o = 0 or 1,
n = 2 - 300, preferably 20 - 50.

Particularly preferably, polymers consisting of repeating units derived from olefinically unsaturated polyethers in particular are homo- or copolymers of monomethylpolyethylene glycol (meth)acrylate ester, polyethylene glycol vinyl ether, polyethylene glycol allyl ether, polyethylene glycol methallyl ether, polyethylene glycol isoprenyl ether.

Polymers consisting of repeating units derived from olefinically unsaturated polyethers can be prepared by free radical polymerization. Suitable conditions for carrying out free radical polymerization are known per se to the person skilled in the art and are described, for example, in EP 1 103 570.

The at least one additive of the present invention can be present in substance. This means that essentially no further chemicals are used together with the additive. This is preferred within the present context. It is also possible that the additive of the present invention is present in the form of a dispersion or solution in a solvent, especially in water.

The at least one additive is interground and/or intermixed with at least one constituent of the cementitious composition in a method of the present invention.

This means that the at least one additive selected from polyvinylimidazole, amides of sugar acids, polymers consisting of repeating units derived from olefinically unsaturated polyethers, and mixtures thereof, can be added to at least one constituent of the cementitious composition, especially to calcined clay, cementitious binder, in particular cements, especially Portland cement and/or pozzolanes and latent hydraulic materials different from calcined clay, lime, limestone, calcium sulfate, aggregates, fillers, admixtures different from the additive of the present invention, water, or any mixture thereof.

It is, for example, possible to add the at least one additive prior to and/or during the grinding of at least one constituent of the cementitious composition, especially to Portland cement, calcined clay, and/or limestone.

According to embodiments, in a method of the present invention, in step (i) calcined clay is provided, and step (iii) is a step of intergrinding, whereby calcined clay is interground with the at least one additive by adding said additive prior to and/or during the grinding of calcined clay.

According to embodiments, in a method of the present invention, in step (i) Portland cement is provided, and step (iii) is a step of intergrinding, whereby Portland cement is interground with the at least one additive by adding said additive prior to and/or during the grinding of Portland cement.

According to embodiments, in a method of the present invention in step (i) limestone is provided, and step (iii) is a step of intergrinding, whereby limestone is interground with the at least one additive by adding said additive prior to and/or during the grinding of limestone.

Intergrinding the at least one additive of the present invention with at least one constituent of a cementitious composition comprising calcined clay has the advantage that the proportion of the additive can be adjusted to the nature of the cementitious binder, e.g. the proportion of silicate and/or aluminate phases, or the amount of sulfate in the cementitious binder.

Means for intergrinding constituents of the cementitious composition, especially Portland cement, calcined clay, or limestone, are not particularly limited and are known to the skilled person per se.

It is likewise possible to intermix the at least one additive of the present invention with at least one constituent of the cementitious composition.

It is possible to intermix the at least one additive of the present invention with calcined clay, cementitious binder, in particular cements, especially Portland cement and/or pozzolanes and latent hydraulic materials different from calcined clay, lime, limestone, calcium sulfate, aggregates, fillers, admixtures different from the additive of the present invention, water, or any mixture thereof.

It is for example also possible to intermix the at least one additive of the present invention with a dry mortar or a wet mortar or a concrete, whereby the dry mortar or the wet mortar or the concrete is based on a cementitious composition comprising calcined clay. This also includes intermixing of the at least one additive during the manufacture of the dry mortar or wet mortar or concrete.

It is for example possible to intermix the at least one additive of the present invention with water, especially with mixing water, which is then added to a dry mortar or concrete, whereby the dry mortar or concrete is based on a cementitious composition comprising calcined clay.

According to embodiments, in a method of the present invention, in step (i) a dry mortar, a wet mortar, or a concrete mixture is provided, and step (iii) is a step of intermixing, whereby the at least one additive is added and mixed with the dry mortar, the wet mortar, or the concrete.

Means for intermixing the at least one additive of the present invention with at least one constituent of the cementitious mixture, especially with a dry mortar, a wet mortar or a concrete mixture, are not particularly limited and a renown to the skilled person per se.

It can be preferred that the at least one additive of the present invention is added and mixed with a cementitious composition comprising calcined clay before any mixing water is added. Thereby, the at least one additive preferably is homogeneously mixed with the other constituents of the cementitious composition. This ensures, that the at least one additive is already homogeneously present in the cementitious composition when mixing water is added and workability needs to be provided.

According to embodiments, in a method of the present invention the dosage of the at least one additive is between 0.0005 to 1.0 w%, preferably 0.001 to 0.1 w%, more preferably 0.003 - 0.06 w%, still more preferably 0.004 - 0.05 w%, relative to the combined dry weight of cementitious binder.

In particular, in a method of the present invention the dosage of the at least one additive is between 0.001 to 0.1 w%, preferably 0.003 - 0.06 w%, more preferably 0.004 - 0.05 w%, relative to the combined dry weight of Portland cement and calcined clay, and, if present, limestone and calcium sulfate.

In very preferred embodiments, in a method of the present invention, the dosage of polyvinylimidazol, preferably homo-polyvinylimidazol, is between 0.015 - 0.05 w%, relative to the combined dry weight of Portland cement and calcined clay, and, if present, limestone and calcium sulfate.

It can be preferred, in a method of the present invention, that additionally at least one high range water reducer, in particular at least one polycarboxylate ether, is present in the cementitious composition.

High range water reducers can be selected from lignosulfonates, naphthalene sulfonates, sulfonated naphthalene-formaldehyde condensates, melamine sulfonates, vinyl copolymers, sulfonated vinyl copolymers, and polycarboxylate ethers. Polycarboxylate ethers are preferred.

In very preferred embodiments, in a method of the present invention, at least one polycarboxylate ether is present in the cementitious composition where the additive is polyvinylimidazol, preferably homo-polyvinylimidazol.

Within the present context, the term "polycarboxylate ether" stands for copolymers comprising
(i) repeating units derived from monomeric units A of the general structure (III), 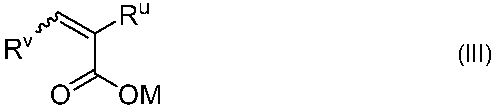 and
(ii) repeating units derived from monomeric units B of the general structure (IV), 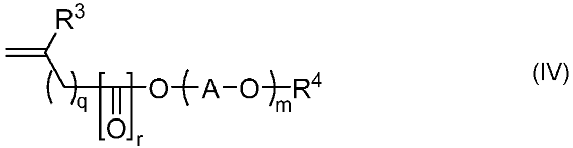 wherein
   each R^{u} independently of one another is H or a methyl group,
   each R^{v} independently of one another is H or COOM,
   each M independently of one another is H, an alkali metal ion or an alkaline earth metal ion,
   the wavy bond stands for both, cis- and trans-configuration where applicable,
   R³ is H or methyl,
   R⁴ is H or C1 - C8 alkyl,
   A independently of one another is CₙH₂ₙ, preferably is C₂H₄ or C₃H₆,
   q = 0, 1, or 2,
   r = 0 or 1,
   m = 2 - 300,
   and wherein the repeating units A and B in the copolymer have a molar ratio A : B between 10 : 90 - 90 :10, preferably 20 : 80 - 80 : 20, more preferably 30 : 70 - 80 : 20, especially
   35 : 65 - 75 : 25.

According to preferred embodiments, AO is ethylene oxide and/or propylene oxide, especially ethylene oxide. According to further preferred embodiments, n is 10 - 250, preferably 30 - 200, more preferably 35 - 200, especially 40 - 110.

Polycarboxylate ethers according to the present invention can be statistical or non-statistical copolymers. Non-statistical copolymers are in particular alternating copolymers or block or gradient copolymers or mixtures thereof.

In particular the total amount of polycarboxylate ether present in a cementitious composition of the present invention is between 0.01 - 0.5 w%, preferably 0.02 - 0.15 w%, relative to the total dry weight of the cementitious binder, especially the combined dry weight of Portland cement, calcined clay, and, if present, limestone and gypsum.

It is possible that the at least one high range water reducer, in particular the at least one polycarboxylate ether, is interground and/or intermixed with at least one constituent of the present invention independently of the at least one additive of the present invention.

It is also possible that the at least one high range water reducer, in particular the at least one polycarboxylate ether, is interground and/or intermixed with at least one constituent of the present invention together with the at least one additive of the present invention. Thereby, the at least one high range water reducer, in particular the at least one polycarboxylate ether, and the at least one additive can be added for interginding and/or intermixing in the form of a one-component admixture. This means, that the at least one high range water reducer, in particular the at least one polycarboxylate ether, and the at least one additive can be present as a pre-mix.

Therefore, the present invention also relates to an admixture for a cementitious composition comprising calcined clay, said admixture comprising at least one additive selected from polyvinylimidazole, amides of sugar acids, polymers consisting of repeating units derived from olefinically unsaturated polyethers, and optionally additionally comprising at least one high range water reducer, in particular a polycarboxylate ether.

All embodiments and features described above also apply to this aspect.

In another aspect, the present invention relates to a cementitious composition comprising calcined clay and additionally comprising at least one additive selected from polyvinylimidazole, amides of sugar acids, polymers consisting of repeating units derived from olefinically unsaturated polyethers, and mixtures thereof.

All embodiments and features described above also apply to this aspect.

In particular, the cementitious of the present invention comprises Portland cement and calcined clay in a weight ratio of Portland cement to calcined clay from 33:1 to 1:2, preferably from 10:1 to 1:1, more preferably from 4:1 to 1:1.

Further preferably, the cementitious composition of the present invention additionally comprises limestone whereby the weight ratio of
a) Portland cement to calcined clay is from 33:1 to 1:2, preferably from 10:1 to 1:1, more preferably from 4:1 to 1:1,
b) Portland cement to limestone is from 20:1 to 1:4, preferably from 10:1 to 1:1, more preferably from 5:1 to 1:1,
c) calcined clay to limestone is from 10:1 to 1:33, preferably from 5:1 to 1:10, more preferably from 5:1 to 1:1, and
optionally additionally comprises calcium sulfate in an amount of 1 - 8 w%, preferably 2 - 4 w%, relative to the total combined weight of Portland cement, limestone, and calcined clay.

The cementitious of the present invention preferably comprises the at least one additive in an amount of between 0.0005 to 1.0 w%, preferably 0.001 to 0.1 w%, more preferably 0.003 - 0.06 w%, still more preferably 0.004 - 0.04 w%, relative to the combined weight of Portland cement and calcined clay, and, if present, limestone and calcium sulfate.

A cementitious composition of the present invention is obtainable by intermixing of the constituents in dry form. Suitable methods of mixing are known to the person skilled in the art per se. Especially, a cementitious composition of the present invention can be obtained by intermixing calcined clay and optionally limestone and calcium sulfate, followed by blending this mix with Portland cement to form a cementitious binder. The cementitious binder may then be intermixed with aggregate, fillers, and admixtures different from the additive of the present invention. Other orders of mixing are, however, also possible. It is also possible to intergrind two or more of the constituents of a cementitious composition. It is, however, preferred within the present context that the calcined clay be ground separately of the other constituents. According to preferred embodiments, a cementitious composition of the present invention is obtained by intermixing the constituents of the cementitious composition in dry form. It is particularly not possible within the present context to produce a cementitious composition by intermixing the constituents followed by a heat treatment or clinkering procedure.

It is especially preferred that a cementitious composition of the present invention is obtained in a method as described above.

A cementitious composition of the present invention can be in dry form or in wet form mixed with water. Preferably, a cementitious composition of the present invention is selected from a cementitious binder, a dry mortar, a wet mortar, or a concrete.

A cementitious composition of the present invention comprising calcined clay and at least one additive has the advantage of an improved workability as compared to the same cementitious composition comprising calcined clay but without the at last one additive. An improved workability refers in particular refers to at least one of the following:
(i) an increased slump as measured according to standard EN 12350-2:2019,
(ii) an increased slump flow as measured according to standard EN 12350-5:2019,
(iii) an increased slump flow spread as measured according to standard EN 12350-8:2019,
(iv) a reduced flow time as measured according to standard EN 12350-9:2010,
(v) a reduced loss of any of the properties (i) - (iv) over time,
(vi) a reduced amount of water needed to achieve the same level of any of the properties (i) - (iv) at a given time.

Aggregates and fillers, within the present context, are any materials that are inert during the hydration reaction of the mineral binder. Aggregates and fillers are defined by the particle size, whereby aggregates have a particle size of more than 0.063 mm and up to 4, or 8, or 16, or even 32 mm and fillers having a particle size of lower than 0.063 mm. The particle size here refers to a particle size D90 or D50, which can be measured by sieving according to standard ASTM C136-06 or ASTM C 117.

Typical aggregates and fillers are gravel, sand, and powdered quartz. Limestone is not a filler within the present context.

Additionally, the cementitious composition may comprise an admixture which is different form the additive of the present invention. Especially the additive is selected from plasticizers, accelerators, retarders, corrosion inhibitors, shrinkage reducers, rheology aids, thickeners, air-entraining agents, antifoams, and/or foam-formers.

### Examples

The following raw materials were used.

| | |
|---|---|
| OPC | Portland cement type CEM I 42.5N |
| CC | Metakaolin from high purity kaolin clay (particle size D90: 15 µm, D50: 3.2 µm) |
| LL | Ground limestone (94.6 w% CaCOs, 4,6 w% MgCOs; particle size D97: 125 µm) |
| CaSO₄ | calcium sulfate (Sigma Aldrich; 99.99% purity) |
| Sand | CEN standard sand EN 196-1 |
| Filler | Fine crushed rock (particle size D50 < 63 µm) |
| PVIm | Homo-polyvinylimidazole (Mw = 5000 g/mol) used as aqueous solution with 30 w% solids content |
| PEGMA | Homopolymer of polyethylene oxide)-methacrylate ester (monomer Mw = 2000 g/mol) |
| Gluc | Gluconic acid sodium salt (Sigma Aldrich) |
| GDL-1 | 1,6-Diaminohexane-N,N'-digluconamide |
| GDL-2 | 1,2-Diaminoethane-N,N'-digluconamide |
| GDL-3 | Benzylamine-N-gluconamide |
| GDL-4 | N-(3-triethoxysilyl)propyl)gluconamide |
| GDL-5 | N-(((3-(triethoxysilyl)propyl)amino)ethyl)gluconamide |
| GDL-6 | N-(poly-co-(propylene oxide-ethylene oxide))-gluconamide with 35 propylene oxide and 6 ethylene oxide repeating units statistically arranged |
| High range water reducer | Polycarboxylate ether (ethylene oxide side chains with Mw of 2400 g/mol; molar ratio of carboxylate groups to side chains appr. 3.5) used as aqueous solution with 50 w% solids content |

### Example 1

Mortar compositions were prepared by dry mixing 306 g OPC, 90 g CC, 45 g LL, 9 g CaSO₄, and 1350 g of sand in a Hobart mixer until visually homogeneous. Water was added in an amount to realize a water to powder ratio of 0.125. A high range water reducer in an amount of 0.11 w% (related to the dry solid), relative to the cementitious binder (sum of OPC, CC, LL, CaSO₄), and the type and amount of additive as listed in below table 1 were added together with the mixing water. Addition of mixing water, high range water reducer, and additive was done over 30 seconds at speed 1 of the Hobart mixer and mixing was then continued for another 30 seconds at speed 2. The mortar was allowed to rest for 90 seconds and finally mixed for 60 seconds at speed 2. The total wet mixing time therefore was 4 minutes in each case.

Flow was measured according to standard EN 1015-3:2007 after the time indicated in below table 1. Results are expressed in "%" versus the reference (a positive value indicating an increase, a negative value indicating a decrease). The reference values being in mm.

The hydration peak was measured as follows: 40 g sample of the freshly mixed mortar composition was placed in a 90 mL plastic container and transferred to one channel of the Calmetrix Isothermal calorimeter, which was set at 23°C. The hydration of the sample was then recorded for at least 48 hours and the time needed to reach a first hydration peak was determined.

The following table 1 shows the results obtained.

**Table 1: Ref-1 and Ref-2 (not inventive), Examples 1-1 - 1-9 (inventive)**

| **Example** | **Ref-1** | **Ref-2** | **1-1** | **1-2** | **1-3** | **1-4** |
|---|---|---|---|---|---|---|
| Additive (type) | none | Gluc | PVlm | PEGMA | GDL-1 | GDL-1 |
| Additive (amount)* | | 0.062 | 0.031 | 0.031 | 0.031 | 0.062 |
| Flow @ 5 min | 203 | 5% | 12% | 3% | 4% | 12% |
| Flow @ 30 min | 186 | 11% | 20% | 5% | 8% | 18% |
| Flow @ 60 min | 177 | 14% | 16% | 2% | 6% | 13% |
| Flow @ 90 min | 169 | 14% | 12% | 2% | 2% | 11% |
| Hydration peak [min] | 595 | 1000 | 638 | 605 | 687 | 750 |

| | | | | | | |
|---|---|---|---|---|---|---|
| *in w% (related to the dry solid) relative to the total weight of cementitious binder, | | | | | | |

**Table 1 (continued)**

| **Example** | **1-5** | **1-6** | **1-7** | **1-8** | **1-9** |
|---|---|---|---|---|---|
| Additive (type) | GDL-2 | GDL-3 | GDL-4 | GDL-5 | GDL-6 |
| Additive (amount)* | 0.062 | 0.051 | 0.062 | 0.040 | 0.031 |
| Flow @ 5 min | 8% | 15% | 7% | 3% | 12% |
| Flow @ 30 min | 13% | 17% | 12% | 8% | 13% |
| Flow @ 60 min | 10% | 14% | 10% | 11% | 12% |
| Flow @ 90 min | 8% | 14% | 10% | 12% | 11% |
| Hydration peak [min] | 760 | 810 | 815 | 865 | 655 |

| | | | | | |
|---|---|---|---|---|---|
| *in w% (related to the dry solid) relative to the total weight of cementitious binder | | | | | |

It can be seen from the results in table 1 that the flow, and therefore the workability, of a cementitious composition comprising calcined clay can be increased by additives of the present invention. A particularly strong increase in flow, even at low dosages, was observed for homo-polyvinylimidazol (example 1) and for alkoxylated gluconamide (example 9). Tale 1 also shows the effect of a known retarder (gluconic acid, Ref-2). The retarding effect is obvious from the longer time needed to reach the hydration peak as compared to the reference. A comparison of examples 1 - 9 to Ref-2 shows that additives of the present invention are significantly less retarding.

### Example 2

Micro concrete compositions were prepared by dry mixing 375 g OPC, 234 g CC, 117 g LL, 24 g CaSO₄, 148 g of filler, 731 g of sand (0-1 mm), 1107 g of sand (1 - 4 mm), and 1154 g of sand (4-8 mm) in a Hobart mixer until visually homogeneous. Water was added in an amount to realize a water to binder ratio of 0.45. A high range water reducer was added in an amount of 0.17 w% (related to the dry solid), relative to the cementitious binder (sum of OPC, CC, LL, CaSO₄), and the type and amount of additive as listed in below table 2 were added together with the mixing water. Addition of mixing water, high range water reducer, and additive was done over 30 seconds at speed 1 of the Hobart mixer and mixing was then continued for another 30 seconds at speed 2. The mortar was allowed to rest for 90 seconds and finally mixed for 60 seconds at speed 2. The total wet mixing time therefore was 4 minutes in each case.

Flow was measured as in Example 1.

The following table 2 shows the results obtained.

**Table 2: Examples Ref-3 (not inventive) and Examples 2-1 to 2-12 (inventive)**

| **Example** | **Ref-3** | **2-1** | **2-2** | **2-3** | **2-4** | **2-5** | **2-6** |
|---|---|---|---|---|---|---|---|
| Additive (type) | none | PEGMA | PEGMA | PEGMA | PVlm | PVIm | PVIm |
| Additive (amount)* | | 0.015 | 0.030 | 0.045 | 0.015 | 0.030 | 0.045 |
| Flow @ 5 min | 201 | 19% | 28% | 28% | 8% | 19% | 27% |
| Flow @ 30 min | 155 | 37% | 56% | 55% | 18% | 44% | 51% |
| Flow @ 60 min | 138 | 28% | 54% | 53% | 12% | 38% | 50% |
| Flow @ 90 min | 129 | 17% | 40% | 36% | 6% | 22% | 37% |
| Flow @ 120 min | 121 | 7% | 24% | 22% | 3% | 16% | 26% |

| | | | | | | | |
|---|---|---|---|---|---|---|---|
| *in w% (related to the dry solid) relative to the total weight of cementitious binder | | | | | | | |

**Table 2 (continued)**

| **Example** | **2-7** | **2-8** | **2-9** | **2-10** | **2-11** | **2-12** |
|---|---|---|---|---|---|---|
| Additive (type) | GDL-2 | GDL-2 | GDL-2 | GDL-1 | GDL-1 | GDL-1 |
| Additive (amount)* | 0.015 | 0.030 | 0.045 | 0.015 | 0.030 | 0.045 |
| Flow @ 5 min | 8% | 16% | 18% | 18% | 18% | 22% |
| Flow @ 30 min | 6% | 19% | 28% | 25% | 23% | 24% |
| Flow @ 60 min | 4% | 14% | 15% | 16% | 17% | 21% |
| Flow @ 90 min | 2% | 10% | 12% | 7% | 11% | 14% |
| Flow @ 120 min | 2% | 9% | 11% | 7% | 8% | 12% |

| | | | | | | |
|---|---|---|---|---|---|---|
| *in w% relative to the total weight of cementitious binder | | | | | | |

### Example 3

Micro concrete was prepared as described for example 2 with the only difference that the amount of high range water reducer was as shown in below table 3.

Flow was measured as described in example 1.

Compressive strength (C.S.) was measured after the time indicated according to standards EN 196-1:2016 and EN 12190:1998 on 40 x 40 x 160 cm prisms.

The following table 3 shows the results obtained.

**Table 3: Examples Ref-3 (not inventive) and Examples 3-1 to 3-3 (inventive)**

| **Example** | **Ref-3** | **3-1** | **3-2** | **3-3** |
|---|---|---|---|---|
| Additive (type) | None | PVlm | PEGMA | GDL-2 |
| Additive (amount)* | | 0.015 | 0.015 | 0.015 |
| High range water reducer (amount)* | 0.168 | 0.147 | 0.150 | 0.150 |
| Flow @ 5 min | 201 | 1.5% | 1% | -0.5% |
| Flow @ 30 min | 155 | -2% | 10% | -1% |
| Flow @ 60 min | 138 | -4% | -1% | -4% |
| Flow @ 90 min | 129 | -5% | -5% | -5% |
| Flow @ 120 min | 121 | -7% | -5% | -5% |
| C.S. @ 1d [MPa] | 8.0 | 7.3 | n.m. | 8.0 |
| C.S. @ 28d [MPa] | 50.6 | 52 | 54.4 | 53.3 |

| | | | | |
|---|---|---|---|---|
| *in w% relative to the total weight of cementitious binder | | | | |

It can be seen from the results of above table 3 that the combined amount of polycarboxylate ether and additive of the present invention can be reduced as compared to the amount needed of the same polycarboxylate ether without additive to achieve the same workability. In other words, there is a synergistic effect when using an additive of the present invention in combination with a polycarboxylate ether.

### Example 4

Micro concrete compositions were prepared by dry mixing OPC, CC, LL, and CaSO₄ as indicated in below table 4 in each case together with 148 g of filler, 731 g of sand (0-1 mm), 1107 g of sand (1 - 4 mm), and 1154 g of sand (4-8 mm) in a Hobart mixer until visually homogeneous. Water was added in an amount to realize a water to binder ratio of 0.45. A high range water reducer was added in an amount as indicated in below table 4, as dry solids relative to the cementitious binder (sum of OPC, CC, LL, CaSO₄), and the type and amount of additive as listed in below table 4 were added together with the mixing water. Addition of mixing water, high range water reducer, and additive was done over 30 seconds at speed 1 of the Hobart mixer and mixing was then continued for another 30 seconds at speed 2. The mortar was allowed to rest for 90 seconds and finally mixed for 60 seconds at speed 2. The total wet mixing time therefore was 4 minutes in each case.

Flow was measured as in Example 1.

The following table 4 shows the results obtained.

**Table 4: Examples Ref-4 to Ref-6 (not inventive) and Examples 4-1 to 4-3 (inventive)**

| **Example** | **Ref-4** | **4-1** | **Ref-5** | **4-2** | **Ref-6** | **4-3** |
|---|---|---|---|---|---|---|
| OPC [g] | 510 | 510 | 375 | 375 | 240 | 240 |
| CC [g] | 150 | 150 | 234 | 234 | 319 | 319 |
| LL [g] | 75 | 75 | 117 | 117 | 159 | 159 |
| CaSO₄ [g] | 15 | 15 | 24 | 24 | 32 | 32 |
| High range water reducer (amount) | 0.144 | 0.144 | 0.156 | 0.156 | 0.171 | 0.171 |
| Additive (type) | none | PEGMA | none | PEGMA | none | PEGMA |
| Additive (amount)* | | 0.030 | | 0.030 | | 0.030 |
| Flow @ 5 min | 198 | 14% | 202 | 17% | 202 | 19% |
| Flow @ 30 min | 152 | 40% | 157 | 42% | 155 | 41% |
| Flow @ 60 min | 144 | 35% | 144 | 39% | 132 | 36% |
| Flow @ 90 min | 141 | 15% | 132 | 16% | 122 | 15% |
| Flow @ 120 min | 130 | 9% | 125 | 10% | 110 | 14% |

| | | | | | | |
|---|---|---|---|---|---|---|
| *in w% (related to the dry solid) relative to the total weight of cementitious binder | | | | | | |

## Claims

1. A method to improve the workability of cementitious compositions comprising calcined clay, said method comprising the steps of
(i) providing at least one constituent of the cementitious composition,
(ii) providing at least one additive selected from polyvinylimidazole, amides of sugar acids, polymers consisting of repeating units derived from olefinically unsaturated polyethers, and mixtures thereof, and
(iii) intergrinding and/or intermixing the at least one additive provided in step (ii) with the at least one constituent of cementitious composition provided in step (i).

2. The method as claimed in claim 1, **characterized in that** the cementitious composition comprises calcined clay and cement, preferably calcined clay and Portland cement, especially metakaolin and Portland cement.

3. The method as claimed in claim 2, **characterized in that** the cementitious composition additionally comprises limestone and optionally additionally comprises calcium sulfate.

4. The method as claimed in any of the claims 1 - 3, **characterized in that** in step (i) calcined clay is provided, and **in that** step (iii) is a step of intergrinding, whereby calcined clay is interground with the at least one additive by adding said additive prior to and/or during the grinding of calcined clay.

5. The method as claimed in any of the claims 1 - 3, **characterized in that** in step (i) Portland cement is provided, and **in that** step (iii) is a step of intergrinding, whereby Portland cement is interground with the at least one additive by adding said additive prior to and/or during the grinding of Portland cement.

6. The method as claimed in any of the claims 1 - 3, **characterized in that** in step (i) limestone is provided, and **in that** step (iii) is a step of intergrinding, whereby limestone is interground with the at least one additive by adding said additive prior to and/or during the grinding of limestone.

7. The method as claimed in any of the claims 1 - 3, **characterized in that** in step (i) a dry mortar, a wet mortar, or a concrete mixture is provided, and **in that** step (iii) is a step of intermixing, whereby the at least one additive is added and mixed with the dry mortar, the wet mortar, or the concrete.

8. The method as claimed in any of the claims 2-7, **characterized in that** the weight ratio of Portland cement to calcined clay is from 33:1 to 1:2, preferably from 10:1 to 1:1, more preferably from 4:1 to 1:1.

9. The method as claimed in any of the claims 3-7, **characterized in that** the weight ratio of
a) Portland cement to calcined clay is from 33:1 to 1:2, preferably from 10:1 to 1:1, more preferably from 4:1 to 1:1,
b) Portland cement to limestone is from 20:1 to 1:4, preferably from 10:1 to 1:1, more preferably from 5:1 to 1:1,
c) calcined clay to limestone is from 10:1 to 1:33, preferably from 5:1 to 1:10, more preferably from 5:1 to 1:1, and
optionally 1 - 8 w%, preferably 2 - 4 w%, of calcium sulfate, relative to the total combined dry weight of Portland cement, limestone, and calcined clay.

10. The method as claimed in any of the claims 2-9, **characterized in that** the dosage of the at least one additive is between 0.0005 to 1.0 w%, preferably 0.001 to 0.1 w%, more preferably 0.003 - 0.06 w%, still more preferably 0.004 - 0.05 w%, relative to the combined dry weight of cementitious binder.

11. The method as claimed in any of the preceding claims, **characterized in that** additionally a high range water reducer, in particular a polycarboxylate ether, is present in the cementitious composition.

12. A cementitious composition comprising calcined clay and additionally comprising at least one additive selected from polyvinylimidazole, amides of sugar acids, polymers consisting of repeating units derived from olefinically unsaturated polyethers, and mixtures thereof.

13. The cementitious composition according to claim 12, **characterized in that** it comprises Portland cement and calcined clay in a weight ratio of Portland cement to calcined clay is from 33:1 to 1:2, preferably from 10:1 to 1:1, more preferably from 4:1 to 1:1.

14. The cementitious compositions according to claim 13, **characterized in that** it additionally comprises limestone whereby the weight ratio of
a) Portland cement to calcined clay is from 33:1 to 1:2, preferably from 10:1 to 1:1, more preferably from 4:1 to 1:1,
b) Portland cement to limestone is from 20:1 to 1:4, preferably from 10:1 to 1:1, more preferably from 5:1 to 1:1,
c) calcined clay to limestone is from 10:1 to 1:33, preferably from 5:1 to 1:10, more preferably from 5:1 to 1:1, and
optionally additionally comprises calcium sulfate in an amount of 1 - 8 w%, preferably 2 - 4 w%, relative to the total combined weight of Portland cement, limestone, and calcined clay.

15. The cementitious composition according to at least one of claims 12 - 14, **characterized in that** the at least one additive is present between 0.0005 to 1.0 w%, preferably 0.001 to 0.1 w%, more preferably 0.003 - 0.06 w%, still more preferably 0.004 - 0.04 w%, relative to the combined weight of Portland cement and calcined clay, and, if present, limestone and calcium sulfate.

16. An admixture for a cementitious composition comprising calcined clay, said admixture comprising at least one additive selected from polyvinylimidazole, amides of sugar acids, polymers consisting of repeating units derived from olefinically unsaturated polyethers, and optionally additionally comprising at least one high range water reducer, in particular a polycarboxylate ether.
